# EUROPÄISCHE PATENTSCHRIFT

(11) **EP 3 194 182 B1**
(45) Veröffentlichungstag und Bekanntmachung des Hinweises auf die Patenterteilung: **28.10.2020**
(21) Anmeldenummer: 15729521.3
(22) Anmeldetag: 22.06.2015
(51) Int. Cl.: B60C 11/01, B60C 11/04, B60C 11/03, B60C 11/11

(54) **FAHRZEUGLUFTREIFEN**
VEHICLE TIRES
PNEU DE VÉHICULE

(30) Priorität: 17.09.2014 DE 102014218662
(43) Veröffentlichungstag der Anmeldung: 26.07.2017
(73) Patentinhaber: Continental Reifen Deutschland GmbH, 30165 Hannover (DE)
(72) Erfinder: NEUBER, Malgorzata, 31515 Wunstorf (DE); VON ZOBELTITZ, Carsten, 30926 Seelze (DE); KLEFFMANN, Jens, 30453 Hannover (DE)
(74) Vertreter: Finger, Karsten
(86) Internationale Anmeldenummer: PCT/EP2015/063905
(87) Internationale Veröffentlichungsnummer: WO 2016/041647

(56) Entgegenhaltungen:
- EP-A1- 0 686 517
- EP-A1- 2 781 368
- EP-A1- 2 990 219

## Beschreibung

Die Erfindung betrifft einen Fahrzeugluftreifen für Nutzfahrzeuge mit einem Gürtel und mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung A zur Äquatorebene Ä des Reifens hin durch eine über den Umfang des Fahrzeugluftreifens erstreckte Rille und auf seiner von der Äquatorebene Ä wegweisenden Seite jeweils von einer Oberfläche der Reifenseitenwand begrenzt wird, welche die von der Äquatorebene Ä wegweisende Flanke des Schulterprofilbandes bildet, wobei das Laufstreifenprofil in den die Reifenachse beinhaltenden Schnittebenen von einer die Straßenkontaktoberfläche bildenden Oberfläche begrenzt wird, die zwischen den Schulterprofilbändern eine zum Reifen hin gekrümmte Oberflächenkonturlinie K bildet, wobei die die Straßenkontaktoberfläche bildende Oberfläche in wenigstens einem Schulterprofilband in einem an die Umfangsrille angrenzenden axialen ersten Erstreckungsabschnitt der Breite a als die Verlängerung der gekrümmten Oberflächenkonturlinie K in das Schulterprofilband ausgebildet ist, und in einem an den ersten Erstreckungsabschnitt anschließend ausgebildeten zweiten Erstreckungsabschnitt der Breite c, der sich bis zur Oberfläche der Reifenseitenwand erstreckt, längs der axialen Erstreckung nach außen hin in ihrer radialen Position des Reifens stetig abnimmt.

Fahrzeugluftreifen für Nutzfahrzeuge mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung A zur Äquatorebene Ä des Reifens hin durch eine über den Umfang des Fahrzeugluftreifens erstreckte Rille und auf seiner von der Äquatorebene Ä wegweisenden Seite jeweils von einer Oberfläche der Reifenseitenwand begrenzt wird, welche die von der Äquatorebene wegweisende Flanke des Schulterprofilbandes bildet, wobei das Laufstreifenprofil in den die Reifenachse beinhaltenden Schnittebenen von einer die Straßenkontaktoberfläche bildenden Oberfläche begrenzt wird, die zwischen den Schulterprofilbändern eine zum Reifen hin gekrümmte Oberflächenkonturlinie bildet.

Derartige Fahrzeugluftreifen für Nutzfahrzeuge sind bekannt. Bei derartigen Reifen bildet der Außenkonturzug in den Querschnittebenen, die die Reifenachse beinhalten, jeweils die Schnittlinienkontur der aus den nach radial außen gerichteten, die Profilrippen bzw. Profilblockelemente von Profilblockreihen begrenzenden Oberflächen gebildeten Mantelfläche. Üblicher Weise erstreckt sich der Außenkonturzug ausgehend von der Schnittlinie der einen Reifenseitenwand des Reifen mit der nach radial außen gerichteten Oberfläche des zu dieser ersten Reifenseitenwand weisenden Schulterbandes bis zur Schnittlinie der anderen Reifenseitenwand mit der nach radial außen gerichteten Oberfläche des zu dieser zweiten Reifenseitenwand hinweisenden Schulterbandes stetig leicht gekrümmt.

Es ist bekannt bei derartigen Nutzfahrzeugluftreifen durch Reduktion der Profiltiefe über die gesamte Erstreckung des Laufstreifenprofils eine Reduzierung des Rollwiderstands zu ermöglichen, jedoch zu Lasten der Abriebeigenschaften des Nutzfahrzeugluftreifens .

Es ist auch bekannt, lediglich das Schulterprofilband über seine gesamte in axialer Richtung A des Reifens gebildete Breitenerstreckung hinweg mit einer reduzierten Profiltiefe gegenüber den zwischen den Schulterprofilbändern ausgebildeten Profilbändern auszubilden. Im axialen Erstreckungsbereich der das Schulterprofilband von den benachbarten Profilbändern trennenden Umfangsrille ist hierdurch ein regelrechter Sprung der Oberflächenkontur und der Profiltiefe ausgebildet. Derartige Komplettreduktionen der Profiltiefe im Bereich der Schulterbänder beeinflussen sowohl die Abriebeigenschaften als auch den Rollwiderstand negativ.

Aus der deutschen Patentanmeldung DE 10 2009 044 418.1 ist es bekannt zur Reduktion des Rollwiderstandes das Schulterband mit seiner Oberflächenkontur in einem ersten an die trennende Umfangsrille angrenzenden axialen Erstreckungsbereich dem Oberflächenkonturzug des zwischen den Schulterbändern ausgebildeten Laufstreifenprofils folgend bis zu einer Sprungstelle im Schulterband auszubilden, an welcher sprunghaft die Oberflächenkontur verändert und dabei die Profiltiefe deutlich reduziert wird. Das Schulterband ist ab dieser Sprungstelle mit der in einer reduzierten radialer Position ausgebildeten Oberflächenkontur und mit reduzierter Profiltiefe in einem zweiten axialen Erstreckungsbereich des Schulterbandes bis zur Seitenwand erstreckt ausgebildet. Diese Ausbildung führt bereits zu deutlichen Verbesserungen des Rollwiderstandes. Aufgrund des durch die Materialentnahme deutlich reduzierten Gummimaterials erhöht sich hierdurch der Abrieb geringfügig. Die sprunghafte Veränderung ermöglicht noch das Entstehen von Rissbildungen.

Aus der WO 2012/126671 A ist es bekannt, bei einem derartigen Fahrzeugluftreifen zur Reduktion des Rollwiderstandes und des Abriebes die Oberflächenkontur im Schulterband zunächst in einem ersten Erstreckungsabschnitt, welcher an die trennende Umfangsrille angrenzt, bis zu einer Knickstelle dem Oberflächenkonturzug folgend auszubilden. Die Oberflächenkontur ist dann ab dieser Knickstelle bis zur Seitenwand hin in einem axialen zweiten Erstreckungsabschnitt geradlinig erstreckt unter Einschluss eines Neigungswinkels an die in der Knickstelle an die Oberflächenkonturlinie ausgebildete Tangente in radialer Richtung nach innen hin geneigt ausgebildet. Diese Ausbildung mit einer Art fasenförmigen Verlauf des zweiten Erstreckungsabschnitts ermöglicht bereits gute Rollwiderstandseigenschaften bei reduzierter Rissbildung. Allerdings ist im zweiten Erstreckungsabschnitt noch relativ viel Gummimaterial vorhanden. Das Potential zur Optimierung des Rollwiderstandes ist auch bei dieser Ausführung noch nicht vollständig genutzt.

Aus der EP 2 990 219 A1 ist es bekannt, bei speziellen mit einem Harzrahmen ausgebildeten Reifen in einer Position axial außerhalb des Gürtels einen konkav gekrümmten Konturverlauf auszubilden.

Aus der EP 0 686 517 A1 ist ein Fahrzeugluftreifen gemäß den Merkmalen des Oberbegriffs von Anspruch 1 bekannt.

Der Erfindung liegt die Aufgabe zugrunde, einen Fahrzeugluftreifen für Nutzfahrzeuge gemäß den Merkmalen des Anspruchs 1 des Oberbegriffes zu schaffen, bei welchem mit einfachen Mitteln ein verbesserter Rollwiderstand bei weiterer Reduktion von Rissbildungen ermöglicht wird.

Die Aufgabe wird erfindungsgemäß durch Ausbildung eines Fahrzeugluftreifens für Nutzfahrzeuge mit einem Gürtel und mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband ausgebildet ist, das in axialer Richtung A zur Äquatorebene Ä des Reifens hin durch eine über den Umfang des Fahrzeugluftreifens erstreckte Rille und auf seiner von der Äquatorebene Ä wegweisenden Seite jeweils von einer Oberfläche der Reifenseitenwand begrenzt wird, welche die von der Äquatorebene Ä wegweisende Flanke des Schulterprofilbandes bildet, wobei das Laufstreifenprofil in den die Reifenachse beinhaltenden Schnittebenen von einer die Straßenkontaktoberfläche bildenden Oberfläche begrenzt wird, die zwischen den Schulterprofilbändern eine zum Reifen hin gekrümmte Oberflächenkonturlinie K bildet, wobei die die Straßenkontaktoberfläche bildende Oberfläche in wenigstens einem Schulterprofilband in einem an die Umfangsrille angrenzenden axialen ersten Erstreckungsabschnitt der Breite a als die Verlängerung der gekrümmten Oberflächenkonturlinie K in das Schulterprofilband ausgebildet ist, und in einem an den ersten Erstreckungsabschnitt anschließend ausgebildeten zweiten Erstreckungsabschnitt der Breite c, der sich bis zur Oberfläche der Reifenseitenwand erstreckt, längs der axialen Erstreckung nach außen hin in ihrer radialen Position des Reifens stetig abnimmt, bei dem die die Straßenkontaktoberfläche bildende Oberfläche im zweiten Erstreckungsabschnitt mit einem ersten Teilabschnitt, der sich bis zu einem Punkt P erstreckt, und aus einem zweiten Teilabschnitt, welcher sich ausgehend vom Punkt P bis zur Oberfläche der Reifenseitenwand erstreckt, ausgebildet ist, und bei dem die die Straßenkontaktoberfläche bildende Oberfläche im ersten Teilabschnitt mit konkav gekrümmten Konturverlauf und im zweiten Teilabschnitt mit konvex gekrümmtem Konturverlauf ausgebildet ist mit einem Wendpunkt des Konturverlaufs im Punkt P, wobei der Punkt P in axialer Richtung A außerhalb des Gürtels angeordnet ist, gemäß den Merkmalen von Anspruch 1 gelöst, wobei in den die Reifenachse beinhaltenden Schnittebenen der konkav gekrümmte Konturverlauf ein mit Krümmungsradius Rₐ um einen Krümmungsmittelpunkt Mₐ gekrümmter Konturverlauf ist, wobei der Krümmungsmittelpunkt Mₐ außerhalb der Konturlinie auf der vom Reifen wegweisenden Seite der Konturlinie angeordnet ist, wobei der erste Teilabschnitt mit konkav gekrümmtem Konturverlauf in axialer Richtung A des Reifens ausgehend von einer axialen Position innerhalb der Gürtelerstreckung bis zum Punkt P außerhalb des Gürtels erstreckt ausgebildet ist.

Durch diese Ausbildung wird es ermöglicht, dass sowohl der Rollwiderstand als auch der Abrieb und somit die Langlaufleistung des Reifens verbessert werden können. Die weiter verbesserte Materialverteilung im Schulteraußenbereich ermöglicht dabei eine Optimierung des Rollwiderstandes. Die Ausbildung mit dem im Wendepunkt außerhalb des Gürtels ausgebildeten Wechsel von zunächst konkavem und zu einem dann zur Reifenseitenwand hin konvexem Konturverlauf im zweiten Erstreckungsabschnitt ermöglicht dabei sowohl eine verbesserte Materialverteilung - und somit einen weiter verbesserten Rollwiderstand - als auch die Vermeidung von unstetigen sprunghaften Materialveränderungen - und somit von Rissbildungen. Die Ausbildung mit einem im ersten Teilabschnitt ausgebildeten konkaven Konturverlauf ermöglicht dabei eine Vergleichmäßigung der Konturverlaufsänderungen bei großer wirksamer Volumenreduktion von Gummimaterial. Die anschließende konvexe Ausbildung des Konturverlaufes ermöglicht eine weitere Vergleichmäßigung des Konturverlaufs zur Schulter hin bei weiterer Materialreduktion. Die konkave und anschließend konvexe Ausbildung mit dem Punkt P als Wendepunkt ermöglichen somit eine deutliche Vergleichmäßigung des Konturverlaufs bei gleichzeitiger Materialreduktion und begünstigen hierdurch eine weitere Rollwiderstandsreduktion. Die Ausbildung dieses Verlaufes mit Wendepunkt axial außerhalb des Gürtels ermöglicht eine deutliche Rissbildungsreduktion. Die deutliche, aber vergleichmäßigte Materialveränderung aufgrund des Konturverlaufs im zweiten Erstreckunsgabschnitt bewirkt im Einsatz unter Last eine vergleichmäßigte Lastverteilung, optimierte Abriebeigenschaften und hierdurch optimierte Langlaufeigenschaften des Nutzfahrzeugreifens.

Durch diese Ausbildung wird ermöglicht, dass sowohl der Rollwiderstand als auch der Abrieb und somit die Langlaufleistung des Reifens verbessert werden können. Die weiter verbesserte Materialverteilung im Schulteraußenbereich ermöglicht dabei eine Optimierung des Rollwiderstandes die Ausbildung mit dem im Wendepunkt außerhalb des Gürtels ausgebildeten Wechsel aus zunächst konkaven und zur Reifenseitenwand hin konvexen Konturverlauf im zweiten Erstreckungsabschnitt

Durch die Ausbildung, bei der in den die Reifenachse beinhaltenden Schnittebenen der konkav gekrümmte Konturverlauf ein mit Krümmungsradius Rₐ um einen Krümmungsmittelpunkt Mₐ gekrümmter Konturverlauf ist, wobei der Krümmungsmittelpunkt Mₐ außerhalb der Konturlinie auf der vom Reifen wegweisenden Seite der Konturlinie angeordnet ist, wird eine weitere Vergleichmäßigung der Materialveränderung durch eine einzige Krümmung und damit eine weitere Verbesserung zur Vermeidung von Rissbildungen ermöglicht.

Durch die Ausbildung des ersten Teilabschnitts mit konkav gekrümmten Konturverlauf in axialer Richtung des Reifens ausgehend von einer axialen Position innerhalb der Gürtelerstreckung bis zum Punkt P außerhalb des Gürtels wird eine erhöhte Materialreduktion und damit eine weitere Reduktion des Rollwiderstands ermöglicht.

Besonders vorteilhaft ist die Ausbildung eines Fahrzeugluftreifens gemäß den Merkmalen von Anspruch 2, wobei der Krümmungsradius Rₐ mit 15mm≤ Rₐ ≤100mm ausgebildet ist. Dies ermöglicht einen optimalen Kompromiss zwischen Rollwiderstandsminimierung und guten Widersands gegen Rissbildungen.

Besonders vorteilhaft ist die Ausbildung eines Fahrzeugluftreifens gemäß den Merkmalen von Anspruch **3,** wobei der Krümmungsradius Rₐ mit P_{T} ≤ Rₐ ausgebildet ist, wobei P_{T} die maximale Profiltiefe des Reifens ist. Dies ermöglicht eine weitere Optimierung des Rollwiderstandes bei relativ geringem Abstand des Punktes P zur Reifenachse unter Aufrechterhaltung guten Widerstandes gegen Rissbildungen.

Besonders vorteilhaft ist die Ausbildung eines Fahrzeugluftreifens gemäß den Merkmalen von Anspruch **4,** wobei in den die Reifenachse beinhaltenden Schnittebenen der konvex gekrümmte Konturverlauf ein mit Krümmungsradius Rᵢ um einen Krümmungsmittelpunkt Mᵢ gekrümmter Konturverlauf ist, wobei der Krümmungsmittelpunkt Mᵢ außerhalb der Konturlinie auf der zum Reifen hinweisenden Seite der Konturlinie angeordnet ist, wobei Rᵢ mit Rᵢ > Rₐ ausgebildet ist. Dies ermöglicht eine weitere Vergleichmäßigung der Materialveränderung und damit eine weitere Verbesserung zur Vermeidung von Rissbildungen. Darüber hinaus kann hier dabei im Konturverlauf eine Art breites Plateau mit maximaler Materialreduktion unter Nutzung der Vorteile des durch die Radien bedingten gleichmäßigen Übergangs erzielt und Rollwiderstand optimiert werden.

Besonders vorteilhaft ist die Ausbildung eines Fahrzeugluftreifens gemäß den Merkmalen von Anspruch **5**, wobei der Krümmungsradius Rᵢ mit 100mm≤Rᵢ≤2000mm ausgebildet ist. Hierdurch kann in einfacher Weise im Konturverlauf eine Art breites Plateau mit großer Materialreduktion und weiter reduziertem Rollwiderstand umgesetzt werden.

Besonders vorteilhaft ist die Ausbildung eines Fahrzeugluftreifens gemäß den Merkmalen von Anspruch **6,** wobei die Breite c mit 5mm≤c≤30mm ausgebildet ist. Hierdurch kann in einfacher Weise ein ausreichend große Breite c zur Optimierung des Rollwiderstand als auch eine ausreichend kleine Breite c für Verbesserungen zur Vermeidung von Rissbildungen unter Vermeidung nennenswerter negativer Einflüsse auf gute Handlingeigenschaften umgesetzt werden.

Besonders vorteilhaft ist die Ausbildung eines Fahrzeugluftreifens gemäß den Merkmalen von Anspruch **7,** wobei der Punkt P in axialer Richtung A mit einem in axialer Richtung A gemessenen Abstand d mit 5mm≤d≤10mm vom Gürtel angeordnet ist. Hierdurch kann in einfacher Weise eine Vergleichmäßigung der Materialverteilung begünstigt werden.

Besonders vorteilhaft ist die Ausbildung eines Fahrzeugluftreifens gemäß den Merkmalen von Anspruch **8,** wobei der Punkt P in einer Radialen Position radial innerhalb der radialen Position eines Punktes Q mit radialem Abstand e zum Punkt Q mit 0mm≤e≤2mm angeordnet ist, wobei der Punkt Q die Position des Schnittes der Verlängerung der Profiltiefenkonturlinie K_{P} mit dem im ersten Teilabschnitt konkav gekrümmtem Konturverlauf bildet. Hierdurch kann in einfacher Weise die Gummidicke zur Gürtelkante hin für eine hoher Haltbarkeit ausreichend dick gestaltet und dennoch eine umfangreiche Materialreduktion umgesetzt werden.

Besonders vorteilhaft ist die Ausbildung eines Fahrzeugluftreifens gemäß den Merkmalen von Anspruch **9,** wobei das Profilband als Profilrippe ausgebildet ist. In Verbindung mit Profilrippen kann eine maximale Materialreduktion umgesetzt werden. Hierdurch können die Effekte des Konturverlaufes optimiert genutzt werden.

Besonders vorteilhaft ist die Ausbildung eines Fahrzeugluftreifens gemäß den Merkmalen von Anspruch **10,** wobei das Profilband als Profilblockreihe ausgebildet ist.

Besonders vorteilhaft ist die Ausbildung eines Fahrzeugluftreifens gemäß den Merkmalen von Anspruch **11,** wobei der Fahrzeugluftreifen für den Einsatz auf der Antriebsachse eines Nutzfahrzeuges ausgebildet ist.

Die Erfindung ist im Folgenden an Hand der in den Figuren 1 bis 3 dargestellten Ausführungsbeispiele am Beispiel eines Fahrzeugluftreifens radialer Bauart für die Antriebsachse eines Nutzfahrzeuges näher erläutert. Darin zeigen
- Fig. 1: einen durch die Reifenachse gebildeten Querschnitt eines Nutzfahrzeugluftreifens,
- Fig. 2: vergrößerte Darstellung des Schulterabschnitts des Nutzfahrzeugluftreifens von Fig.1 in Querschnittsdarstellung und
- Fig. 3: vergrößerte Darstellung des Details III von Fig. 2.

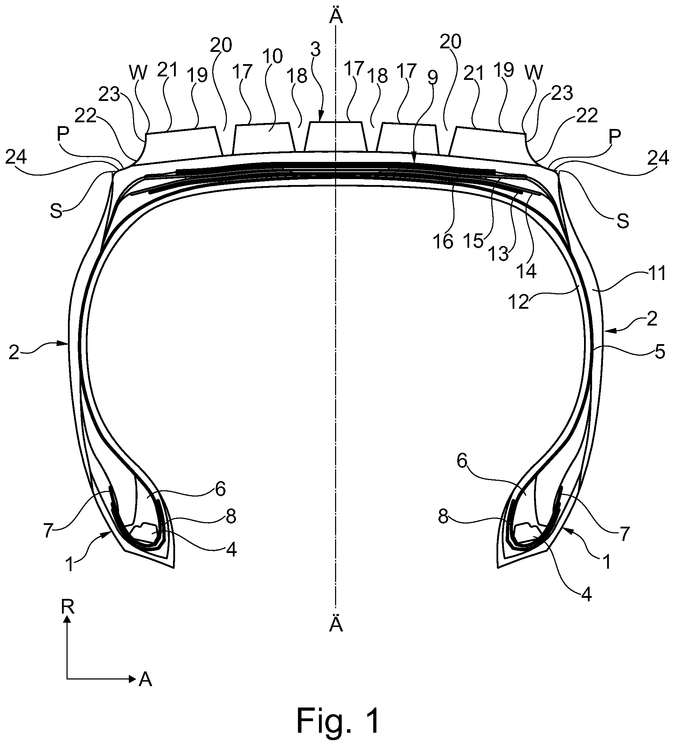

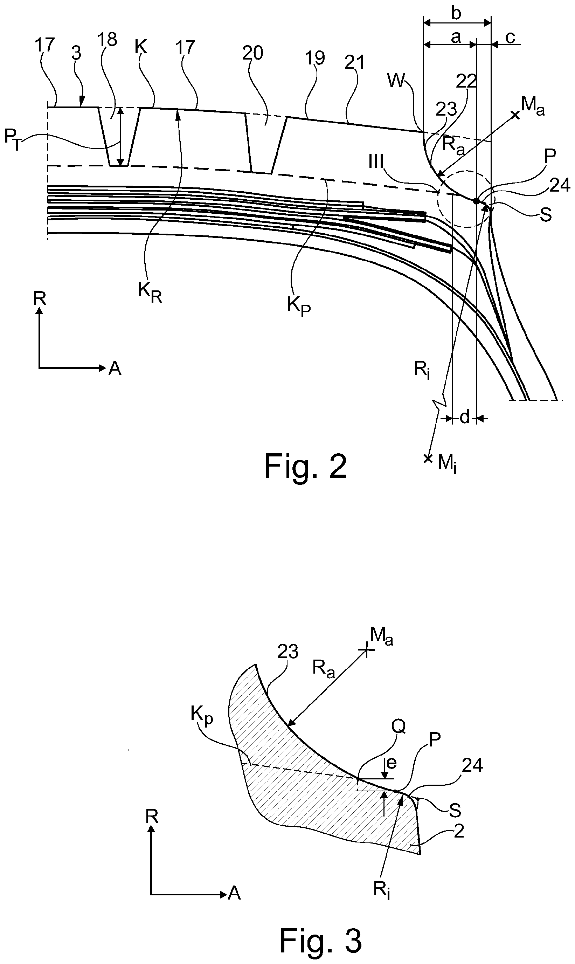

Fig.1 und Fig.2 zeigen einen Nutzfahrzeugluftreifen radialer Bauart für die Antriebsachse eines Nutzfahrzeuges mit zwei in radialer Richtung R des Fahrzeugreifens erstreckten Seitenwänden 2 und einem axial dazwischen ausgebildeten Kronenbereich 3. Die Seitenwände sind an ihrem in radialer Richtung nach innen weisenden Erstreckungsende jeweils mit einem Wulstbereich 1 ausgebildet in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 des Fahrzeugluftreifens und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse 5 ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung A entlang des radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 6. Die Karkasse 5 ist in bekannter , nicht näher dargestellter Weise aus einer oder mehreren in Umfangsrichtung U über den gesamten Umfang des Fahrzeugluftreifens erstreckten Karkassenlage mit jeweils in Gummi eingebetteten parallelen Korden - beispielsweise Stahlkorden - , welche sich im Bereich der Seitenwände 2 im Wesentlichen in radialer Richtung R und im Kronenbereich 3 im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem, besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher mit bekannter Vierlagenanordnung aus vier in radialer Richtung R übereinander und aufeinanderliegend angeordneten Gürtellagen 13, 14, 15 und 16 bekannter Art ausgebildet ist. Die Gürtellagen 13,14,15 und 16 sind jeweils in bekannter Weise aus in Kautschuk eingebetteten Stahlkorden oder anderen zur Herstellung von Gürtellagen von Nutzfahrzeugreifen geeigneten bekannten Festigkeitsträgern hergestellt. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Das Laufstreifenprofil 3 ist in den beiden Reifenschultern aus jeweils einem radial erhabenen, ein Schulterband bildenden Profilband 19 ausgebildet. Die beiden Profilbänder 19 sind über den gesamten Umfang des Fahrzeugluftreifens erstreckt und in Umfangsrichtung U des Fahrzeugluftreifens ausgerichtet ausgebildet. Zur Äquatorebene Ä des Fahrzeugluftreifens hin wird das Profilband 19 jeweils durch eine über den gesamten Umfang des Fahrzeugluftreifens erstreckte und in Umfangsrichtung U ausgerichtete Umfangsrille 20 begrenzt. Zwischen den beiden Umfangsrillen 20 ist das Laufstreifenprofil 3 aus mehreren in axialer Richtung A des Fahrzeugluftreifens nebeneinander angeordneten, jeweils über den gesamten Umfang des Fahrzeugluftreifens erstreckten und in Umfangsrichtung ausgerichteten Profilbändern 17 ausgebildet. Benachbarte Profilbänder 17 dieses zentralen zwischen den Umfangsrillen 20 ausgebildeten Erstreckungsbereiches sind jeweils in axialer Richtung A des Fahrzeugluftreifens durch eine Umfangsrille 18, welche sich über den gesamten Umfang des Fahrzeugluftreifens erstreckt und in Umfangsrichtung ausgerichtet ist, voneinander beabstandet. Im dargestellten Ausführungsbeispiel von Fig. 1 sind zwischen den beiden den jeweiligen Schulterbereich vom zentralen Erstreckungsabschnitt des Laufstreifenprofils 3 trennenden Umfangsrillen 20 drei Profilbänder 17 ausgebildet, welche den zentralen Erstreckungsbereich bilden.

Die Umfangsrillen 20 und 18 sind in radialer Richtung nach innen hin von einem Rillengrund begrenzt und mit der maximalen Profiltiefe P_{T} ausgebildet. Die Umfangsrillen tangieren mit ihrem Rillengrund in radialer Richtung nach innen hin die in den die Reifenachse beinhaltenden Querschnittebenen gebildete Tiefenkonturlinie Kp, welche den Verlauf der maximalen Profiltiefe des Reifens bildet.

Die Umfangsrille 20 bildet dabei jeweils mit ihrer zum angrenzenden Profilband 19 gerichteten Rillenwand, die das Profilband 19 zur Äquatorebene Ä hin begrenzende Flanke des Profilbandes 19.

Die nach axial außen weisende Oberfläche der in Fig. 1 auf der linken Seite dargestellten Reifenseitenwand 2 des Fahrzeugluftreifens bildet in ihrer Verlängerung diejenige Flanke des in der linken Reifenschulter ausgebildeten Profilbands 19, welche dieses Profilband 19 zu der von der Äquatorebene Ä wegweisenden Seite hin begrenzt, und erstreckt sich bis zu der dieses Profilband 19 in radialer Richtung R nach außen begrenzenden Oberfläche, welche sie in den die Reifenachse beinhaltenden Querschnittebenen im Schnittpunkt S schneidet.

Ebenso bildet die nach axial außen weisende Oberfläche der in Fig. 1 auf der rechten Seite dargestellte Reifenseitenwand 2 in ihrer radialen Verlängerung diejenige Flanke des in der rechten Reifenschulter ausgebildeten Profilbandes 19, welche dieses Profilband 19 zu der von der Äquatorebene Ä wegweisenden Seite hin begrenzt, und erstreckt sich bis zu der dieses Profilband 19 in radialer Richtung R nach außen hin begrenzenden Oberfläche, welche sie - wie in Fig. 2 dargestellt - in den die Reifenachse beinhaltenden Querschnittebenen im Schnittpunkt S schneidet.

Die Profilbänder 17 des zentralen Erstreckungsbereiches zwischen den Umfangsrillen 20 sind in radialer Richtung nach außen mit ihrer die Straßenkontaktoberfläche bildenden radial äußeren Oberfläche begrenzt, welche in den die Reifenachse beinhaltenden Querschnittebenen in ihrer Verlängerung über die Umfangsrillen 18 hinweg als Teil der Mantelfläche des Laufstreifenprofils die Oberflächenkonturline K zwischen den Umfangsrillen 20 bildet. Die in radialer Richtung R des Reifens nach außen weisende Oberfläche der Profilbänder 19 ist in einem ersten jeweils unmittelbar an die Umfangsrille 20 angrenzenden axialen Erstreckungsbereich 21 der in axialer Richtung A gemessenen Erstreckungsbreite a in den Querschnittebenen, die die Reifenachse beinhalten, jeweils mit ihrer Außenkonturlinie als Verlängerung der Oberflächenkonturlinie K des zentralen Erstreckungsabschnitts über die Umfangsrille 20 hinweg bis zu einem in axialer Richtung A gemessenen Abstand a von der Umfangsrille 20 ausgebildeten Punkt W ausgebildet.

Die Oberflächenkonturlinie K ist zwischen dem Punkt W der rechten Reifenschulter und dem Punkt W der linken Reifenschulter stetig verlaufend mit leichter Krümmung mit Krümmungsradius K_{R} zum Reifeninnem hin gekrümmt ausgebildet.

Ab dem Punkt W ist die radial äußere Oberfläche des Profilbandes 19 in einem zweiten axialen Erstreckungsbereich 22 längs der axialen Erstreckung bis zum Schnittpunkt S des Profilbandes 19 unter stetiger Abnahme der radialen Position verlaufend ausgebildet. Dieser zweite Erstreckungsbereich 22 erstreckt sich über eine in axialer Richtung A gemessene Erstreckungsbreite c zwischen dem Punkt W und dem Schnittpunkt S des Profilbandes 19.

Dabei ist in dem zweiten axialen Erstreckungsbereich 22 die radial äußere Oberfläche des Profilbandes 19 aus einem ersten Teilerstreckungsabschnitt 23, welcher sich in axialer Richtung A ausgehend vom Punkt W bis zu einem Punkt P auf der radial äußeren Oberflächenkontur erstreckt, und aus einem zweiten Teilerstreckungsabschnitt 24, welcher sich in axialer Richtung A ausgehend von dem Punkt P auf der Oberflächenkontur bis zum Punkt S erstreckt, ausgebildet. Dabei ist die radial äußere Oberfläche des Profilbandes 19 in dem ersten Teilerstreckungsabschnitt 23 mit einem konkav gekrümmten Krümmungsverlauf um einen Krümmungsmittelpunkt Mₐ mit Krümmungsradius Rₐ gekrümmt ausgebildet. Der Krümmungsmittelpunkt Mₐ liegt - wie in Fig. 2 dargestellt ist - auf der vom Reifen weggewandten Seite der Oberflächenkonturlinie des Profilbandes 19 im zweiten Erstreckungsabschnitt 22 außerhalb des Reifens. Der Punkt P bildet einen Wendepunkt im Krümmungsverlauf der Oberflächenkontur im zweiten Erstreckungsabschnitt 22. In dem zweiten Teilerstreckungsabschnitt 24 ist die Oberflächenkontur mit einem konvex gekrümmten Krümmungsverlauf um einen Krümmungsmittelpunkt Mᵢ mit Krümmungsradius Rᵢ gekrümmt ausgebildet. Dabei liegt der Krümmungsmittelpunkt Mᵢ auf der von der Oberflächenkonturlinie im zweiten Erstreckungsabschnitt zum Reifen hingewandten Seite der Konturlinie. In dem als Wendepunkt ausgebildeten Punkt P geht der konkave Krümmungsverlauf des ersten Teilerstreckungsabschnittes 23 tangential in den konvexen Krümmungsverlauf des zweiten Teilerstreckungsabschnittes 24 über.

Der Schnittpunkt S ist im dargestellten Ausführungsbeispiel der Schnittpunkt zwischen der verlängerten Oberflächenkonturlinie der Seitenwand und dem verlängerten Konturverlauf des mit Krümmungsradius R; um den Mittelpunkt Mᵢ gekrümmten zweiten Teilerstreckungsabschnitts 24 mit konvexer Krümmung.

In Fig. 2 ist zur Verdeutlichung der fertigungsbedingt abgerundete Übergang zwischen zweitem Teilerstreckungsabschnitt 24 und Oberflächenkontur der Seitenwand mit starker zusätzlicher Abrundung versehen dargestellt.

Der Punkt P ist - wie in Fig. 2 dargestellt ist - in einer axialen Positon des Reifens axial außerhalb des Gürtels 9 mit einem in axialer Richtung A gemessenen Abstand d von der in axialer Richtung A nächstgelegenen, den Gürtel axial begrenzenden Gürtelkante angeordnet. Wie in den Figuren 1 und 2 zu erkennen ist, erstreckt sich der Gürtel 9 des Fahrzeugluftreifens in axialer Richtung A des Fahrzeugluftreifens bis in den axialen Erstreckungsbereich der Breite b der radial äußeren Oberfläche des jeweiligen Profilbandes 19 hinein und endet dort im Abstand d vom Punkt P.

Wie in Fig.2 und in Fig.3 zu erkennen ist, schneidet die Tiefenkonturlinie K_{P;} welche die maximale Profiltiefe des Reifens darstellt, die radiale Oberflächenkontur des Schulterbandes 21 innerhalb des ersten Teilerstreckungsabschnitts 23 in einem Punkt Q. Der Punkt P ist in einer Postion radial innerhalb der Position des Punktes Q mit in radialer Richtung R gemessenem, radialen Abstand e zum Punkt Q angeordnet.

Die Krümmungsradien Rₐ und R; sind mit Rᵢ > Rₐ ausgebildet.

Dabei ist der Krümmungsradius Rₐ ≥ P_{T}, wobei P_{T} die maximale Profiltiefe des Reifens ist.

Der Krümmungsradius Rᵢ ist mit 100mm ≤ Rᵢ ≤ 2000mm und der Krümmungsradius Rₐ mit 15mm ≤ Rₐ≤ 100mm ausgebildet.

Die in axialer Richtung A gemessene Breite c des zweiten Erstreckungsabschnittes 22 ist mit 5mm ≤ c ≤ 30mm ausgebildet.

Der Abstand d ist mit 5mm ≤ d ≤ 10mm ausgebildet.

Der Abstand e ist mit 0mm ≤ e ≤ 2mm, beispielsweise mit e = 1mm ausgebildet.

Beispielsweise ist Rₐ mit Rₐ = 20mm, Rᵢ mit Rᵢ = 500mm, c mit c = 20mm und d mit d = 6mm ausgebildet.

Wie in Fig. 2 zu erkennen ist, ist die radial äußere Oberfläche mit ihrer Oberflächenkonturlinie K im Erstreckungsbereich 22 dabei ausgehend von Punkt W nach axial außen hin bis zum Schnittpunkt S somit mit einem Konturverlauf ausgebildet, bei welchem die radiale Position der Oberflächenkonturlinie längs ihrer Erstreckung im Erstreckungsbereich 22 ausgehend vom Punkt W bis zum Punkt S des Profilbandes 19 hin kontinuierlich abnimmt.

Die Erstreckungsbreite b ist mit b = (a + c) ausgebildet mit a > 0mm und mit c < b. Die Erstreckungslänge b ist mit 8mm ≤ b ≤ 70mm ausgebildet. Es hat sich als besonders vorteilhaft erwiesen, die Erstreckungslänge b mit 25mm ≤ b ≤ 60mm auszubilden. In den üblichen Reifengrößen für Nutzfahrzeuge ist eine Ausbildung b mit 40mm ≤ b ≤ 55mm besonders wirkungsvoll.

Die Profilbänder 17 des zentralen Erstreckungsbereiches sind als Umfangsrippen bekannter Art oder als Umfangsprofilblockreihen aus über den Umfang des Fahrzeugluftreifens hintereinander angeordneten und jeweils durch Querrillen voneinander getrennten Profilblockelementen bekannter Art ausgebildet. Dabei sind in einer Ausführung alle Profilbänder 17 als Profilrippen ausgebildet. In einer anderen Ausführung sind alle Profilbänder 17 als Profilblockreihen ausgebildet. In einer weiteren Ausführung sind nur einige der Profilbänder 17 als Profilrippen und die anderen Profilbänder 17 als Profilblockreihen ausgebildet.

Die Schulterprofilbänder 19 sind in einer Ausführung als Umfangsrippen ausgebildet, welche sich über den gesamten Umfang des Fahrzeugluftreifens erstrecken. In einer anderen Ausführung sind die Schulterprofilbänder 19 als Schulterprofilblockreihen mit in Umfangsrichtung des Fahrzeugluftreifens hintereinander angeordneten und jeweils durch Querrillen voneinander beabstandeten Profilblockelementen bekannter Art ausgebildet. In einer anderen Ausführung ist das eine Schulterprofilband 19 als Profilrippe und das andere Schulterprofilrippe als Schulterprofilblockreihe ausgebildet.

Die Schulterprofilbänder 19 sind auf ihrer in radialer Richtung R nach außen gerichteten Oberfläche in einer Ausführung zumindest teilweise mit Feineinschnitten bekannter Art versehen.

Der Gürtel 9 ist in anderer, nicht dargestellter Ausführung mit 3 oder mit 5 Gürtellagen ausgebildet.

Die maximale, in radialer Richtung R ausgehend von der Außenkonturlinie K in der Umfangsrille 20 gemessene Profiltiefe P_{T} ist mit P_{T} > 9mm ausgebildet.

### Bezugszeichenliste

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage
- 14: Gürtellage
- 15: Gürtellage
- 16: Gürtellage
- 17: Profilband
- 18: Umfangsrille
- 19: Schulterprofilband
- 20: Umfangsrille
- 21: Erster Erstreckungsbereich
- 22: Zweiter Erstreckungsbereich
- 23: Erster Teilabschnitt
- 24: Zweiter Teilabschnitt

## Patentansprüche

1. Fahrzeugluftreifen für Nutzfahrzeuge mit einem Gürtel (9) und mit einem Laufstreifenprofil, welches sich in axialer Richtung A des Fahrzeugluftreifens zwischen zwei Reifenschultern erstreckt, in welchen jeweils ein über den Umfang des Fahrzeugluftreifens erstreckt ausgebildetes Schulterprofilband (19) ausgebildet ist, das in axialer Richtung A zur Äquatorebene Ä des Reifens hin durch eine über den Umfang des Fahrzeugluftreifens erstreckte Rille (20) und auf seiner von der Äquatorebene Ä wegweisenden Seite jeweils von einer Oberfläche der Reifenseitenwand (2) begrenzt wird, welche die von der Äquatorebene Ä wegweisende Flanke des Schulterprofilbandes (19) bildet, wobei das Laufstreifenprofil in den die Reifenachse beinhaltenden Schnittebenen von einer die Straßenkontaktoberfläche bildenden Oberfläche begrenzt wird, die zwischen den Schulterprofilbändern (19) eine zum Reifen hin gekrümmte Oberflächenkonturlinie K bildet, wobei die die Straßenkontaktoberfläche bildende Oberfläche in wenigstens einem Schulterprofilband (19) in einem an die Umfangsrille (20) angrenzenden axialen ersten Erstreckungsabschnitt (21) der Breite a als die Verlängerung der gekrümmten Oberflächenkonturlinie K in das Schulterprofilband (19) ausgebildet ist, und in einem an den ersten Erstreckungsabschnitt (21) anschließend ausgebildeten zweiten Erstreckungsabschnitt (22) der Breite c, der sich bis zur Oberfläche der Reifenseitenwand erstreckt, längs der axialen Erstreckung nach außen hin in ihrer radialen Position des Reifens stetig abnimmt,
wobei die die Straßenkontaktoberfläche bildende Oberfläche im zweiten Erstreckungsabschnitt (22) mit einem ersten Teilabschnitt (23), der sich bis zu einem Punkt P erstreckt, und aus einem zweiten Teilabschnitt (24), welcher sich ausgehend vom Punkt P bis zur Oberfläche der Reifenseitenwand (2) erstreckt, ausgebildet ist,
wobei die die Straßenkontaktoberfläche bildende Oberfläche im ersten Teilabschnitt (23) mit konkav gekrümmten Konturverlauf und im zweiten Teilabschnitt (24) mit konvex gekrümmtem Konturverlauf ausgebildet ist mit einem Wendepunkt des Konturverlaufs im Punkt P, wobei der Punkt P in axialer Richtung A außerhalb des Gürtels (9) angeordnet ist,
**dadurch gekennzeichnet,**
**dass** in den die Reifenachse beinhaltenden Schnittebenen der konkav gekrümmte Konturverlauf ein mit Krümmungsradius Rₐ um einen Krümmungsmittelpunkt Mₐ gekrümmter Konturverlauf ist, wobei der Krümmungsmittelpunkt Mₐ außerhalb der Konturlinie auf der vom Reifen wegweisenden Seite der Konturlinie angeordnet ist und
**dass** der erste Teilabschnitt (23) mit konkav gekrümmtem Konturverlauf in axialer Richtung A des Reifens ausgehend von einer axialen Position innerhalb der Gürtelerstreckung bis zum Punkt P außerhalb des Gürtels (9) erstreckt ausgebildet ist.

2. Fahrzeugluftreifen gemäß den Merkmalen von Anspruch 1,
wobei der Krümmungsradius Rₐ mit 15mm≤ Rₐ ≤100mm ausgebildet ist.

3. Fahrzeugluftreifen gemäß den Merkmalen von Anspruch 1 oder 2,
wobei der Krümmungsradius Rₐ mit P_{T} ≤ Rₐ ausgebildet ist, wobei P_{T} die maximale Profiltiefe des Reifens ist.

4. Fahrzeugluftreifen gemäß den Merkmalen von einem oder mehreren der Ansprüche 1, 2 oder 3,
wobei in den die Reifenachse beinhaltenden Schnittebenen der konvex gekrümmte Konturverlauf ein mit Krümmungsradius Rᵢ um einen Krümmungsmittelpunkt Mᵢ gekrümmter Konturverlauf ist, wobei der Krümmungsmittelpunkt Mᵢ außerhalb der Konturlinie auf der zum Reifen hinweisenden Seite der Konturlinie angeordnet ist, wobei Rᵢ mit Rᵢ > Rₐ ausgebildet ist.

5. Fahrzeugluftreifen gemäß den Merkmalen von Anspruch **4,**
wobei der Krümmungsradius Rᵢ mit 100mm≤ Rᵢ ≤2000mm ausgebildet ist.

6. Fahrzeugluftreifen gemäß den Merkmalen von einem oder mehreren der vorangegangenen Ansprüche,
wobei die Breite c des zweiten Erstreckungsabschnitts (22) mit 5mm≤c≤30mm ausgebildet ist.

7. Fahrzeugluftreifen gemäß den Merkmalen von einem oder mehreren der vorangegangenen Ansprüche,
wobei der Punkt P in axialer Richtung A mit einem in axialer Richtung A gemessenen Abstand d mit 5mm≤d≤10mm vom Gürtel (9) angeordnet ist.

8. Fahrzeugluftreifen gemäß den Merkmalen von einem oder mehreren der vorangegangenen Ansprüche,
wobei der Punkt P in einer radialen Position radial innerhalb der radialen Position eines Punktes Q mit radialem Abstand e zum Punkt Q mit 0mm≤e≤2mm angeordnet ist, wobei der Punkt Q die Position des Schnittes der Verlängerung der Profiltiefenkonturlinie K_{P} mit dem im ersten Teilabschnitt (23) konkav gekrümmtem Konturverlauf bildet.

9. Fahrzeugluftreifen gemäß den Merkmalen von einem oder mehreren der vorangegangenen Ansprüche,
wobei das Profilband (19) als Profilrippe ausgebildet ist.

10. Fahrzeugluftreifen gemäß den Merkmalen von Anspruch 1,
wobei das Profilband (19) als Profilblockreihe ausgebildet ist.

11. Fahrzeugluftreifen gemäß den Merkmalen von einem oder mehreren der vorangegangenen Ansprüche,
wobei der Fahrzeugluftreifen für den Einsatz auf der Antriebsachse eines Nutzfahrzeuges ausgebildet ist.

## Claims

1. Pneumatic vehicle tyre for utility vehicles having a belt (9) and having a tread profile which extends in an axial direction A of the pneumatic vehicle tyre between two tyre shoulders, in which tyre shoulders there is formed in each case one shoulder profile band (19) which is formed so as to extend over the circumference of the pneumatic vehicle tyre and which is delimited, in the axial direction A toward the equatorial plane Ä of the tyre, by a channel (20) extending over the circumference of the pneumatic vehicle tyre and, on its side pointing away from the equatorial plane Ä, in each case by a surface of the tyre side wall (2), which surface forms that flank of the shoulder profile band (19) which points away from the equatorial plane Ä, wherein, in the section planes that encompass the tyre axis, the tread profile is delimited by a surface which forms the road contact surface and which, between the shoulder profile bands (19), forms a surface contour line K which is curved toward the tyre, wherein the surface which forms the road contact surface is, in at least one shoulder profile band (19), in an axial first extent section (21) of the width a adjacent to the circumferential channel (20), formed as the elongation of the curved surface contour line K into the shoulder profile band (19) and, in a second extent section (22) of the width c adjoining the first extent section (21) and extending as far as the surface of the tyre side wall, declines continuously in terms of its radial position of the tyre outwardly along the axial extent,
wherein the surface which forms the road contact surface is, in the second extent section (22), formed with a first subsection (23), which extends as far as a point P, and from a second subsection (24), which extends from the point P to the surface of the tyre side wall (2),
wherein the surface which forms the road contact surface is formed with a concavely curved contour profile in the first subsection (23) and with a convexly curved contour profile in the second subsection (24), with a turning point of the contour profile at the point P, wherein the point P is arranged outside the belt (9) in the axial direction A,
**characterized**
**in that**, in the section planes that encompass the tyre axis, the concavely curved contour profile is a contour profile curved with a curvature radius Rₐ about a curvature central point Mₐ, wherein the curvature central point Mₐ is arranged outside the contour line on that side of the contour line which points away from the tyre,
and
**in that** the first subsection (23) with concavely curved contour profile is formed so as to extend in the axial direction A of the tyre from an axial position within the belt extent to the point P outside the belt (9).

2. Pneumatic vehicle tyre as per the features of Claim 1,
wherein the curvature radius Rₐ is configured such that 15mm≤ Rₐ ≤100mm.

3. Pneumatic vehicle tyre as per the features of Claim 1 or 2,
wherein the curvature radius Rₐ is configured such that P_{T} ≤ Rₐ, where P_{T} is the maximum profile depth of the tyre.

4. Pneumatic vehicle tyre as per the features of one or more of Claims 1, 2 or 3,
wherein, in the section planes that encompass the tyre axis, the convexly curved contour profile is a contour profile curved with a curvature radius Rᵢ about a curvature central point Mᵢ, wherein the curvature central point Mᵢ is arranged outside the contour line on that side of the contour line which points toward the tyre, where Rᵢ is configured such that Rᵢ > Rₐ.

5. Pneumatic vehicle tyre as per the features of Claim 4,
wherein the curvature radius Rᵢ is configured such that 100mm≤ Rᵢ ≤2000mm.

6. Pneumatic vehicle tyre as per the features of one or more of the preceding claims,
wherein the width c of the second extent section (22) is configured such that 5mm≤c≤30mm.

7. Pneumatic vehicle tyre as per the features of one or more of the preceding claims,
wherein the point P is arranged in the axial direction A with a spacing d, measured in the axial direction A, of 5mm≤d≤10mm to the belt (9).

8. Pneumatic vehicle tyre as per the features of one or more of the preceding claims,
wherein the point P is arranged at a radial position radially within the radial position of a point Q with a radial spacing e to the point Q, where 0mm≤e≤2mm, wherein the point Q forms the position of the intersection of the elongation of the profile depth contour line K_{P} with the contour profile concavely curved in the first subsection (23).

9. Pneumatic vehicle tyre as per the features of one or more of the preceding claims,
wherein the profile band (19) is in the form of a profile rib.

10. Pneumatic vehicle tyre as per the features of Claim 1,
wherein the profile band (19) is in the form of a profile block row.

11. Pneumatic vehicle tyre as per the features of one or more of the preceding claims,
wherein the pneumatic vehicle tyre is designed for use on the drive axle of a utility vehicle.

## Revendications

1. Pneumatique destiné à des véhicules utilitaires, ledit pneumatique comprenant une nappe d'armature (9) et un profilé de bande de roulement qui s'étend dans la direction axiale A du pneumatique de véhicule entre deux épaulements de pneumatique dans chacun desquels une bande d'épaulement profilée (19) est formée qui s'étend sur la circonférence du pneumatique de véhicule et qui est délimitée dans la direction axiale A, en direction du plan équatorial Ä du pneumatique, par une rainure (20) qui s'étend sur la circonférence du pneumatique de véhicule et, sur son côté opposé au plan équatorial Ä, à chaque fois par une surface de la paroi latérale de pneumatique (2) qui forme le flanc, opposé au plan équatorial Ä, de la bande d'épaulement profilée (19), le profil de bande de roulement étant délimité, dans les plans de coupe contenant l'axe de pneumatique, par une surface qui forme la surface de contact avec la route et qui forme entre les bandes d'épaulement profilées (19) une ligne de contour de surface K incurvée en direction du pneumatique, la surface formant la surface de contact avec la route étant formée dans au moins une bande d'épaulement profilée (19) dans une première portion d'extension axiale (21) de largeur a, adjacente à la rainure circonférentielle (20), en tant que prolongement de la ligne de contour de surface incurvée K jusque dans la bande d'épaulement profilée (19), et diminuant régulièrement le long de l'extension axiale vers l'extérieur dans sa position radiale du pneumatique dans une deuxième portion d'extension (22) de largeur c, qui est formée à la suite de la première portion d'extension (21) et qui s'étend jusqu'à la surface de la paroi latérale de pneumatique,
la surface qui forme la surface de contact avec la route étant pourvue, dans la deuxième portion d'extension (22), d'une première sous-portion (23) qui s'étend jusqu'à un point P et d'une deuxième sous-portion (24) qui s'étend depuis le point P jusqu'à la surface de la paroi latérale de pneumatique (2),
la surface qui forme la surface de contact avec la route étant pourvue, dans la première sous-portion (23), d'un contour incurvé de manière concave et, dans la deuxième sous-portion (24), d'un contour incurvé de manière convexe avec un point d'inflexion du contour au point P, le point P étant disposé dans la direction axiale A à l'extérieur de la nappe d'armature (9), **caractérisé en ce que**
dans les plans de coupe contenant l'axe de pneumatique, le contour incurvé de manière concave est un contour qui est incurvé autour d'un centre de courbure Mₐ avec un rayon de courbure Rₐ, le centre de courbure Mₐ étant disposé à l'extérieur de la ligne de contour du côté de la ligne de contour qui est opposé au pneumatique, et la première sous-portion (23) est conçue de manière à s'étendre avec un contour incurvé de manière concave dans la direction axiale A du pneumatique à partir d'une position axiale située à l'intérieur de l'extension de nappe d'armature jusqu'au point P situé à l'extérieur de la nappe d'armature (9).

2. Pneumatique de véhicule selon les caractéristiques de la revendication 1,
le rayon de courbure Rₐ étant tel que 15 mm ≤ Rₐ ≤ 100 mm.

3. Pneumatique de véhicule selon les caractéristiques de la revendication 1 ou 2,
le rayon de courbure Rₐ étant tel que P_{T} ≤ Rₐ, P_{T} étant la profondeur de profilé maximale du pneumatique.

4. Pneumatique de véhicule selon les caractéristiques d'une ou plusieurs des revendications 1, 2 et 3,
dans les plans de coupe contenant l'axe de pneumatique, le contour incurvé de manière convexe étant un contour qui est incurvé autour d'un centre de courbure Mᵢ avec un rayon de courbure Rᵢ, le centre de courbure Mᵢ étant disposé à l'extérieur de la ligne de contour du côté de la ligne de contour qui est dirigé vers le pneumatique, Rᵢ étant tel que Rᵢ > Rₐ.

5. Pneumatique de véhicule selon les caractéristiques de la revendication 4,
le rayon de courbure Rᵢ étant tel que 100 mm ≤ Rᵢ ≤ 2000 mm.

6. Pneumatique de véhicule selon les caractéristiques d'une ou plusieurs des revendications précédentes,
la largeur c de la deuxième portion d'extension (22) étant telle que 5 mm ≤ c ≤ 30 mm.

7. Pneumatique de véhicule selon les caractéristiques d'une ou plusieurs des revendications précédentes,
le point P étant disposé dans la direction axiale A à une distance d, mesurée dans la direction axiale A, de la nappe d'armature (9) telle que 5 mm ≤ d ≤ 10 mm.

8. Pneumatique de véhicule selon les caractéristiques d'une ou plusieurs des revendications précédentes,
le point P étant disposé dans une position radiale radialement à l'intérieur de la position radiale d'un point Q à une distance radiale e du point Q telle que 0 mm ≤ e ≤ 2 mm, le point Q formant la position de l'intersection de l'extension de la ligne de contour de profondeur de profilé K_{P} avec le contour incurvé de manière concave dans la première sous-portion (23).

9. Pneumatique de véhicule selon les caractéristiques d'une ou plusieurs des revendications précédentes, la bande profilée (19) étant conçue comme une nervure profilée.

10. Pneumatique de véhicule selon les caractéristiques de la revendication 1,
la bande profilée (19) étant conçue comme une rangée de blocs profilés.

11. Pneumatique de véhicule selon les caractéristiques d'une ou plusieurs des revendications précédentes,
le pneumatique de véhicule étant conçu pour être utilisé sur l'essieu d'entraînement d'un véhicule utilitaire.
